# EUROPÄISCHE PATENTSCHRIFT

(11) **EP 1 316 153 B1**
(45) Veröffentlichungstag und Bekanntmachung des Hinweises auf die Patenterteilung: **06.10.2004**
(21) Anmeldenummer: 01956373.3
(22) Anmeldetag: 24.07.2001
(51) Int. Cl.: H03M 7/30, G07C 5/08

(54) **VERFAHREN UND VORRICHTUNG ZUM AUFZEICHNEN VON ABGETASTETEN INFORMATIONEN, INSBESONDERE VON BETRIEBSDATEN EINES KRAFTFAHRZEUGS**
METHOD AND DEVICE FOR THE PLOTTING OF SCANNED INFORMATION, IN PARTICULAR OPERATING DATA FOR A MOTOR VEHICLE
PROCEDE ET DISPOSITIF D'ENREGISTREMENT D'INFORMATIONS BALAYEES, EN PARTICULIER DE DONNEES DE FONCTIONNEMENT D'UN VEHICULE AUTOMOBILE

(30) Priorität: 26.08.2000 DE 10042005
(43) Veröffentlichungstag der Anmeldung: 04.06.2003
(73) Patentinhaber: ROBERT BOSCH GMBH, 70442 Stuttgart (DE)
(72) Erfinder: GRIMM, Wolfgang, Allison Park, PA 15101 (US)
(86) Internationale Anmeldenummer: PCT/DE2001/002795
(87) Internationale Veröffentlichungsnummer: WO 2002/019267

(56) Entgegenhaltungen:
- EP-A- 0 093 190
- WO-A-90/13890
- US-A- 4 258 421
- US-A- 4 987 541
- US-A- 5 313 848

## Beschreibung

### Stand der Technik

Die vorliegende Erfindung betrifft ein Verfahren zum Aufzeichnen des Verlaufs von Informationen. Die Informationen sind mit einer vorgebbaren Abtastzeit abgetastet. Die Informationen sind insbesondere Betriebsdaten eines Kraftfahrzeugs. Bei dem Verfahren werden die abgetasteten Informationen einer Datenreduktion unterzogen. Dann werden die reduzierten Informationen abgespeichert.

Die Erfindung betrifft außerdem ein Steuerelement für ein Steuergerät zur Steuerung/Regelung bestimmter Kraftfahrzeugkomponenten oder für einen Betriebs- oder Unfalldatenschreiber eines Kraftfahrzeugs. Das Steuerelement ist insbesondere als ein Read-Only-Memory (ROM) einschließlich EPROM oder EEPROM, als ein Random-Access-Memory (RAM) einschließlich FeRAM oder als ein Flash-Memory ausgebildet. Auf dem Steuerelement ist ein Programm abgespeichert, das auf einem Rechengerät, insbesondere auf einem Mikroprozessor, ablauffähig ist.

Die vorliegende Erfindung betrifft schließlich eine Vorrichtung zum Aufzeichnen des Verlaufs von Informationen.

Die Informationen sind mit einer vorgebbaren Abtastzeit abgetastet. Die Informationen sind insbesondere Betriebsdaten eines Kraftfahrzeugs. Die Vorrichtung weist Mittel zur Datenreduktion der abgetasteten Informationen und Mittel zum Abspeichern der reduzierten Informationen auf.

Die Erfindung betrifft außerdem noch ein Computerprogramm und ein Computerprogrammprodukt jeweils mit Programmcode-Mitteln, um bei deren Ausführung auf einem Computer bzw. einer Steuereinheit, eine Aufzeichnung bzw. eine Datenreduktion entsprechend der Oberbegriffe der unabhängigen Ansprüche durchzuführen.

Das Erfassen und Aufzeichnen von Betriebsdaten eines Kraftfahrzeugs gewinnt zunehmend an Bedeutung (vgl. auch DE 199 14 764). Die Betriebsdaten werden von geeigneten Sensoren geliefert und liegen üblicherweise in digitaler Form vor. Die Betriebsdaten sind bspw. die Geschwindigkeit des Kraftfahrzeugs, die Temperatur und der Betriebspunkt einer Brennkraftmaschine des Kraftfahrzeugs, die Betätigung von Gaspedal oder Bremse oder die Aktivierung von bestimmten Kraftfahrzeugfunktionen, insbesondere der Beleuchtung oder der Richtungsleuchten. Die Betriebsdaten werden über die Zeit aufgezeichnet. Da der Speicherplatz in einem Steuergerät zur Steuerung/Regelung bestimmter Kraftfahrzeugkomponenten oder in einem Betriebs- oder Unfalldatenschreiber eines Kraftfahrzeugs beschränkt ist, gilt es die zu speichernden Datenmenge zu reduzieren.

Die Reduzierung der Datenmenge kann auf unterschiedliche Arten erfolgen. Zunächst können Redundanzen in den zu speichernden Informationen vermieden werden, d. h. identische Informationen werden nur einmal abgespeichert.

Des weiteren kann die zu speichernde Datenmenge durch eine Datenreduktion reduziert werden. Dabei wird bei der Abspeicherung auf solche Informationen gezielt verzichtet, die nicht als relevant erachtet werden. Bei der Datenreduktion wird der nicht relevante Informationsgehalt gezielt vernachlässigt. Die ursprünglichen Informationen können aus den reduzierten Informationen lediglich mit einem Informationsverlust rekonstruiert werden.

Schließlich können die zu speichernden Informationen durch eine Datenkompression reduziert werden. Dabei wird die Anzahl der Bits, die zur Speicherung und Übertragung der Informationen notwendig sind, reduziert. Die ursprünglichen Informationen können durch Dekomprimieren der komprimierten Informationen ohne Informationsverlust rekonstruiert werden.

Während zur Datenkompression sehr viele unterschiedliche Verfahren, insbesondere im Bereich der Bilddatenkompression und der Informationstechnik (z. B. Huffmann Kompression; vgl. H. Y. P. Lim: "Interactive data compression tutor", School of Electrical and Electronics Engineering, Birmingham, U.K., February, 1998) sowie Verfahren zur Rekonstruktion von Zeitsignalen, die auf dem Abtasttheorem von Shannon basieren (z. B. Impulse train modulation; vgl. A. V. Oppenheim, R. W. Schaefer: "Discrete-Time Signal Processing", Prentice Hall, Englewood Cliffs, 1989) bekannt sind, gibt es zur Datenreduktion keine allgemeingültigen Verfahren, da ein Verlust von Informationen immer zielgerichtet und damit applikationsabhängig ist.

Aus der EP 0 834 146 B1 ist ein Verfahren und eine Vorrichtung zur Datenreduktion von abgetasteten Informationen bei einer implantierten medizinischen Einrichtung bekannt. Die abgetasteten Informationen sind bspw. die Herzfrequenz eines Patienten. Es wird vorgeschlagen, den Zeitraum zwischen zwei Herzschlägen nicht als Zeitangabe abzuspeichem, sondern jeder Zeitangabe einen bestimmten Wert zuzuordnen, der weniger Speicherplatz beansprucht als die eigentliche Zeitangabe, und diesen Wert dann abzuspeichern.

Aus der DE 41 07 198 A1 ist ein Verfahren und eine Vorrichtung zum Aufzeichnen von Betriebsdaten eines Kraftfahrzeugs bekannt. Um den Speicherplatzbedarf zu reduzieren, wird vorgeschlagen, ältere nicht mehr benötigte Informationen aus dem Speicher zu löschen. Der freigemachte Speicherplatz kann dann zum Abspeichern aktueller Informationen herangezogen werden.

Ein Verfahren und eine Vorrichtung der eingangs genannten Art ist beispielsweise aus der DE 43 44 528 A1 bekannt. Dort wird eine Vorrichtung zur Speicherung von Informationen in Form digitaler Audiosignale beschrieben. Die zu speichernden Informationen werden nach einer Datenreduktion und einer Digital-/Analog- (D-/A-)-Wandlung als Analogwerte in einem Analogspeicher abgelegt. In dieser Druckschrift wird zwar von einer Datenreduktion gesprochen, streng genommen handelt es sich dabei jedoch um eine Datenkompression. Als Verfahren zur Datenkompression werden Adaptive Differential Pulse Code Modulation (ADPCM) und Linear Predictive Coding (LPC) vorgeschlagen. Die gespeicherten Informationen können dem Speicher über eine Analog-/Digital- (A-/D-)-Rückwandtung als Audiosignale entnommen werden.

Daneben beschreibt die US-4,987,541 ein Verfahren zum Aufzeichnen des Verlaufs von mit einer vorgebbaren Abtastzeit abgetasteten Informationen, insbesondere von Betriebsdaten eines Kraftfahrzeugs, bei dem die abgetasteten Informationen einer Datenreduktion unterzogen und die reduzierten Informationen abgespeichert werden, und wobei im Rahmen der Datenreduktion der Verlauf der abgetasteten Informationen in einem Zeitraster von einem Vielfachen der Abtastzeit betrachtet und innerhalb der einzelnen Rasterschritte mindestens eine charakteristische Größe des Verlaufs der abgetasteten Informationen ermittelt wird nach dem Oberbegriff des Anspruchs 1.

Als charakteristische Größe des Verlaufs der abgetasteten Informationen werden dabei die Maximalwerte und/oder Minimalwerte der Abtastwerte innerhalb der Rasterschritte ermittelt. Die Rasterschritte sind dabei gleich groß gewählt.

Der vorliegenden Erfindung liegt die Aufgabe zugrunde, den Verlauf von relevanten digitalen Informationen, insbesondere von Betriebsdaten eines Kraftfahrzeugs, möglichst speicherplatzschonend aufzuzeichnen, und ausgehend vom Stand der Technik den Speicherplatz weiter zu verringern.

Zur Lösung dieser Aufgabe wird ausgehend von dem Verfahren der eingangs genannten Art vorgeschlagen, dass im Rahmen der Datenreduktion der Verlauf der abgetasteten Informationen in einem Zeitraster von einem Vielfachen der Abtastzeit betrachtet wird und die Rasterschritte in Abhängigkeit von mindestens einer weiteren charakteristischen Größe des Verlaufs der abgetasteten Informationen innerhalb eines Rasterschrittes variabel gewählt werden.

### Vorteile der Erfindung

Erfindungsgemäß wird ein Verfahren zum Aufzeichnen von Informationen vorgeschlagen, das bei bestimmten Applikationen, insbesondere beim Aufzeichnen von Betriebsdaten eines Kraftfahrzeugs, eine erhebliche Reduktion der aufzuzeichnenden Datenmenge ohne einen Verlust des relevanten Informationsgehalts ermöglicht. Bei dem erfindungsgemäßen Verfahren wird als relevanter Informationsgehalt eine charakteristische Größe des Verlaufs der abgetasteten Informationen jeweils innerhalb eines Rasterschritte eines Zeitrasters abgespeichert. Es versteht sich, dass mit zunehmender Größe der Rasterschritte die abzuspeichemde Datenmenge um einen größeren Faktor reduziert werden kann. Außerdem ist die abzuspeichemde Datenmenge umso geringer, je weniger charakteristische Größen innerhalb eines Rasterschrittes abzuspeichern sind.

Bei dem erfindungsgemäßen Verfahren werden die aufzuzeichnenden Informationen auf das Wesentliche reduziert, wodurch eine erhebliche Einsparung an Speicherplatz ermöglicht wird. Nach der oben beschriebenen Datenreduktion kann die abzuspeichernde Datenmenge noch durch die Anwendung eines zusätzlichen Datenkompressionsverfahrens weiter reduziert werden.

Eine charakteristische Größe der Verlaufs der abgetasteten Informationen, die für das erfindungsgemäße Verfahren herangezogen werden kann, ist beispielsweise ein Wendepunkt des Verlaufs der Abtastwerte, die Varianz oder die Standardabweichung der Abtastwerte, jeweils innerhalb eines Rasterschritts. Gemäß einer vorteilhaften Weiterbildung der vorliegenden Erfindung wird jedoch vorgeschlagen, dass als charakteristische Größe des Verlaufs der abgetasteten Informationen die Maximalwerte und/oder Minimalwerte der Abtastwerte innerhalb der Rasterschritte ermittelt werden. Innerhalb eines Rasterschrittes wird der Verlauf der abgetasteten Informationen also von Hüllkurven entsprechend dem Maximalwert und/oder dem Minimalwert der Abtastwerte repräsentiert.

Alternativ oder zusätzlich wird vorgeschlagen, dass als charakteristische Größe des Verlaufs der abgetasteten Informationen der Mittelwert der Abtastwerte innerhalb der Rasterschritte ermittelt wird. Anhand der Abweichung der Hüllkurven von der Mittelwertkurve kann ein gewisser Grad der Datenreduktion unmittelbar abgelesen werden. Falls die Kurven weit auseinander liegen, hat sich der Verlauf innerhalb des betrachteten Rasterschrittes stark bewegt. Liegen die Kurven dicht beieinander, ist der Verlauf auf einem nahezu konstanten Wert geblieben.

Gemäß einer bevorzugten Ausführungsform der vorliegenden Erfindung wird vorgeschlagen, dass die Rasterschritte gleich groß gewählt werden.

Gemäß einer alternativen Ausführungsform der vorliegen den Erfindung wird vorgeschlagen, dass die Rasterschritte in Abhängigkeit von weiteren charakteristischen Größen des Verlaufs der abgetasteten Informationen innerhalb eines Rasterschrittes variabel gewählt werden. Die Größe der Rasterschritte ist also an bestimmte Signaleigenschaften gekoppelt, die anhand der charakteristischen Größen beschrieben werden. Diese Signaleigenschaften sind bspw. statistische Größen. Die Rasterschritte werden vorteilhafterweise in Abhängigkeit von der Standardabweichung der Abtastwerte des Verlaufs der Informationen innerhalb eines Rasterschrittes variabel gewählt. Die Rasterschritte werden vorzugsweise so klein gewählt, dass die Standardabweichung einen vorgebbaren Wert nicht übersteigt.

Des Weiteren wird vorgeschlagen, dass die Rasterschritte in Abhängigkeit von dem Abstand des Maximalwerts oder des Minimalwerts zu dem Mittelwert der Abtastwerte innerhalb eines Rasterschrittes des Verlaufs der Informationen variabel gewählt. Vorzugsweise werden die Rasterschritte so klein gewählt, dass der Abstand einen vorgebbaren Wert nicht übersteigt.

Von besonderer Bedeutung ist die Realisierung des erfindungsgemäßen Verfahrens in der Form eines Steuerelements, das für ein Steuergerät zur Steuerung/Regelung bestimmter Kraftfahrzeugkomponenten oder für einen Betriebs- oder Unfalldatenschreiber eines Kraftfahrzeugs vorgesehen ist. Dabei ist auf dem Steuerelement ein Programm abgespeichert, das auf einem Rechengerät, insbesondere auf einem Mikroprozessor, ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, bspw. ein Read-Only-Memory, ein Random-Access-Memory oder ein Flash-Memory.

Als eine weitere Lösung der Aufgabe der vorliegenden Erfindung wird ausgehend von der Vorrichtung zum Aufzeichnen des Verlaufs von abgetasteten Informationen der eingangs genannten Art vorgeschlagen, dass die Mittel zur Datenreduktion den Verlauf der abgetasteten Informationen in einem Zeitraster von einem Vielfachen der Abtastzeit betrachten und innerhalb der einzelnen Rasterschritte mindestens eine charakteristische Größe des Verlaufs der abgetasteten Informationen ermitteln.

Gemäß einer vorteilhaften Weiterbildung der vorliegenden Erfindung wird vorgeschlagen, dass die Vorrichtung Mittel zur Durchführung des erfindungsgemäßen Verfahrens aufweist.

Gemäß einer bevorzugten Ausführungsform der vorliegenden Erfindung wird vorgeschlagen, dass die Vorrichtung Bestandteil mindestens eines Steuergeräts zur Steuerung/Regelung bestimmter Kraftfahrzeugkomponenten ist.

Alternativ wird.vorgeschlagen, dass die Vorrichtung Bestandteil eines Betriebs- oder Unfalldatenschreibers eines Kraftfahrzeugs ist.

Allgemein mit Blick auf die Beispiele des Kraftfahrzeugsteuergerätes und des Betriebsdatenschreibers sowie Unfalldatenschreibers ist das erfindungsgemäße Verfahren auf einem bzw. durch einen Computer bzw. Steuereinheit ausführbar. Deshalb kann allgemein die erfindungsgemäße Vorrichtung als Bestandteil eines Computers bzw. einer Steuereinheit angesehen werden.

Dabei werden ebenfalls Schritte des erfindungsgemäßen Verfahrens bzw. das erfindungsgemäße Verfahren selbst durchgeführt, wenn ein entsprechendes Computerprogramm oder ein entsprechendes Computerprogrammprodukt auf einem Datenträger jeweils mit Programmcode-Mitteln auf einem Computer bzw. einer Steuereinheit ausgeführt wird. Der Datenträger kann dabei insbesondere neben einem oben genannten fest verbauten Steuerelement auch ein mobiler Datenträger wie ein CD-ROM, DVD, Diskette, oder auch jedes andere optische, magnetische, elektromagnetische, usw. Speichermedium sein, wenn der Datenträger durch entsprechende Hilfsmittel computerlesbar ist bzw. gemacht wird.

Weitere Vorteile und vorteilhafte Ausgestaltungen ergeben sich aus den Ansprüchen.

### Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Dabei sind wie bereits erwähnt die bevorzugten Beispiele Kraftfahrzeugsteuergerät und Betriebsdaten- bzw. Unfalldatenschreiber allgemein auf Computer bzw. Steuereinheit mit entsprechender Vorrichtung oder entsprechendem Steuerelement auszuweiten. Somit werden Schritte des erfindungsgemäßen Verfahrens bzw. das erfindungsgemäße Verfahren selbst durchgeführt, wenn ein entsprechendes Computerprogramm oder ein entsprechendes Computerprogrammprodukt auf einem Datenträger auf dem Computer bzw. der Steuereinheit ausgeführt wird. Es zeigen:
- Fig. 1: eine erfindungsgemäße Vorrichtung gemäß einer ersten bevorzugten Ausführungsform der vorliegenden Erfindung;
- Fig. 2: eine erfindungsgemäße Vorrichtung gemäß einer zweiten bevorzugten Ausführungsform der vorliegenden Erfindung;
- Fig. 3: ein Ablaufdiagramm des erfindungsgemäßen Verfahrens gemäß einer bevorzugten Ausführungsform; und
- Fig. 4: einen Verlauf von aufzuzeichnenden Informationen.

### Beschreibung der Ausführungsbeispiele

Das erfindungsgemäße Verfahren dient zum Aufzeichnen des Verlaufs von Informationen. Die aufzuzeichnenden Informationen sind insbesondere Betriebsdaten eines Kraftfahrzeugs. Die Betriebsdaten werden von geeigneten Sensoren geliefert und liegen in digitaler Form vor, d. h. der kontinuierliche zeitliche Verlauf des Betriebsdatensignals wird mit einer vorgebbaren Abtastzeit abgetastet. Die aufzuzeichnenden Betriebsdaten sind bspw. die Geschwindigkeit des Kraftfahrzeugs, die Temperatur und der Betriebspunkt einer Brennkraftmaschine des Kraftfahrzeugs, die Betätigung von Gaspedal oder Bremse oder die Aktivierung von bestimmten Kraftfahrzeugfunktionen, insbesondere der Beleuchtung oder der Richtungsleuchten.

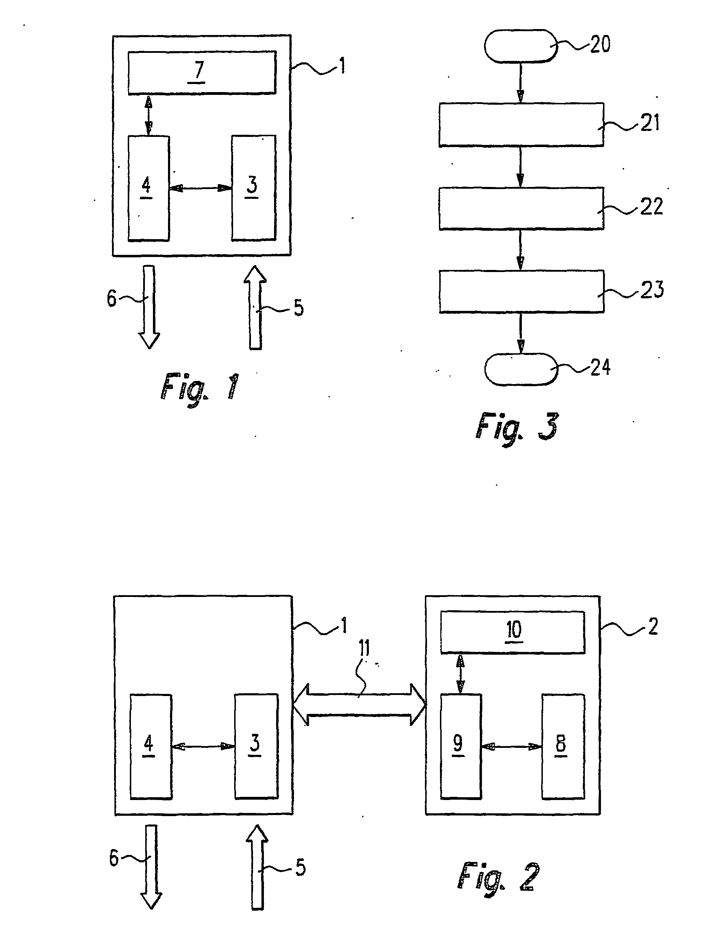

Das erfindungsgemäße Verfahren wird in einem Steuergerät 1 zur Steuerung/Regelung bestimmter Kraftfahrzeugkomponenten (vgl. Fig. 1) oder in einem Betriebs- oder Unfalldatenschreiber 2 (vgl. Fig. 2) eines Kraftfahrzeugs ausgeführt. In dem Steuergerät 1 ist ein Steuerelement 3 vorgesehen, auf dem ein Programm abgespeichert, das auf einem Mikroprozessor 4 ablauffähig ist. Als Steuerelement 3 kann insbesondere ein elektrisches Speichermedium zur Anwendung kommen, bspw. ein Read-Only-Memory, ein Random-Access-Memory oder ein Flash-Memory. Das Programm dient zur Steuerung/Regelung der Kraftfahrzeugkomponenten. Dazu ist das Steuergerät 1 von Eingangssignalen 5 beaufschlagt, diemittels Sensoren gemessene Betriebsgrößen einer Brennkraftmaschine oder anderer Komponenten des Kraftfahrzeugs darstellen. Das Steuergerät 1 erzeugt Ausgangssignale 6, mit denen über Aktoren bzw. Steller das Verhalten bestimmter Kraftfahrzeugkomponenten beeinflusst werden kann.

Auf dem Steuerelement 3 des Steuergeräts 1 aus Fig. 1 ist ein weiteres Programm abgespeichert, das auf dem Mikroprozessor 4 ablauffähig und zur Ausführung des erfindungsgemäßen Verfahrens geeignet ist. Die aufzuzeichnenden Betriebsdaten werden in einem weiteren Speicherelement 7 des Steuergeräts 1 abgespeichert.

Bei dem Ausführungsbeispiel aus Fig. 2 weist der Betriebsoder Unfalldatenschreiber 2 ein Steuerelement"8 und einen Mikroprozessor 9 auf. Auf dem Steuerelement 8 ist ein weiteres Programm abgespeichert, das auf dem Mikroprozessor 9 ablauffähig und zur Ausführung des erfindungsgemäßen Verfahrens geeignet ist. Als Steuerelement 8 kann insbesondere ein elektrisches Speichermedium zur Anwendung kommen, bspw. ein Read-Only-Memory (ROM) einschließlich EPROM oder EEPROM, ein Random-Access-Memory (RAM) einschließlich FeRAM oder ein Flash-Memory. Die aufzuzeichnenden Betriebsdaten werden in einem weiteren Speicherelement 10 des Betriebs- oder Unfalldatenschreibers 2 abgespeichert. Die aufzuzeichnenden Informationen werden dem Betriebs- oder Unfalldatenschreiber 2 über eine geeignete Datenschnittstelle 11 von dem Steuergerät 1 übermittelt.

Da der Speicherplatz in einem Steuergerät bzw. in einem Betriebs- oder Unfalldatenschreiber beschränkt ist, gilt es die zu speichernden Datenmenge zu reduzieren. Deshalb werden die abgetasteten Betriebsdaten zunächst einer Datenreduktion unterzogen. Danach können die reduzierten Betriebsdaten entweder für eine weitere Reduktion der Datenmenge einer Datenkompression unterzogen und erst dann in dem weiteren Speicherelement 7 oder 10 abgespeichert oder unmittelbar abgespeichert werden.

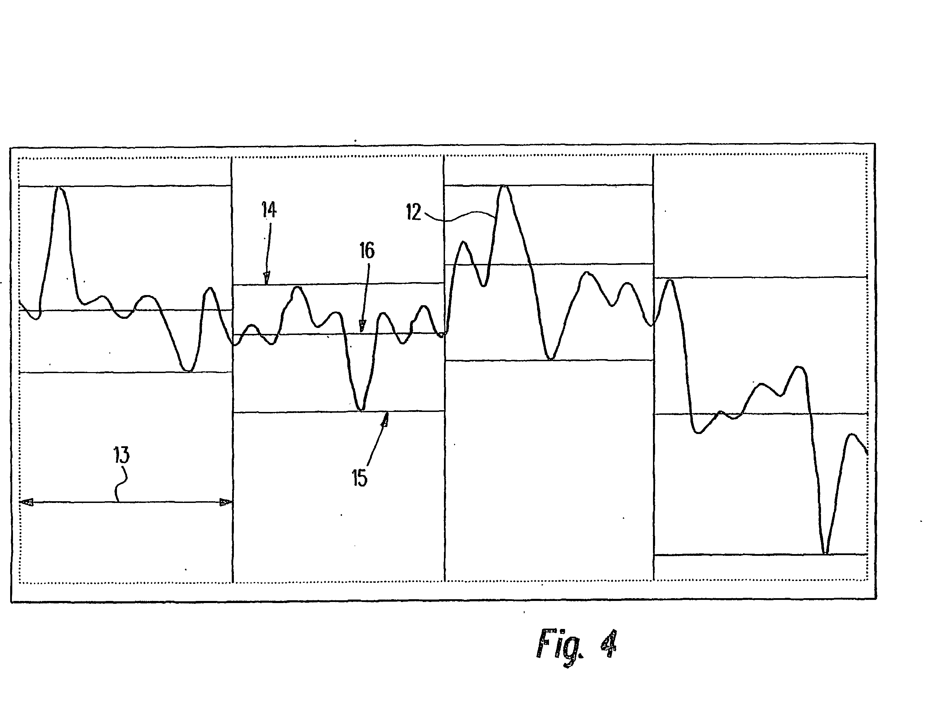

Fig. 3 zeigt ein Ablaufdiagramm eines erfindungsgemäßen Verfahrens zum Aufzeichnen von Betriebsdaten eines Kraftfahrzeugs. Der zeitliche Verlauf der aufzuzeichnenden Betriebsdaten ist in Fig. 4 mit dem Bezugszeichen 12 bezeichnet. Das Verfahren beginnt in einem Funktionsblock 20. Dann werden in einem Funktionsblock 21 im Rahmen der Datenreduktion Rasterschritte 13 eines Zeitrasters ermittelt, in dem der Verlauf 12 der aufzuzeichnenden Betriebsdaten betrachtet wird. Die Rasterschritte 13 sind ein Vielfaches der Abtastzeit, im vorliegenden Fall 400x10⁻⁶ Sekunden.

In einem Funktionsblock 22 werden innerhalb der einzelnen Rasterschritte 13 mehrere charakteristische Größen des Verlaufs 12 der abgetasteten Betriebsdaten ermittelt. In einem Funktionsblock 23 werden die ermittelten charakteristischen Größen dann in dem weiteren Speicherelement 7, 10 abgespeichert. Erfindungsgemäß werden also nicht einige oder alle Abtastwerte des Verlaufs 12 der aufzuzeichnenden Betriebsdaten abgespeichert, sondern lediglich die charakteristischen Größen innerhalb der Rasterschritte 13.

Die dem erfindungsgemäßen Verfahren zugrundeliegende Datenreduktion wird anhand der Fig. 4 näher erläutert. Als charakteristische Größen werden bei dem vorliegenden Ausführungsbeispiel der Maximalwert 14, der Minimalwert 15 und der Mittelwert 16 der Abtastwerte des Verlaufs 12 innerhalb eines Rasterschritts 13 ermittelt. Es können jedoch auch beliebig andere charakteristische Größen ermittelt werden. Die Rasterschritte 13 können entweder gleich groß oder in Abhängigkeit von weiteren charakteristischen Größen des Verlaufs 12 der abgetasteten Betriebsdaten variabel gewählt werden. Als weitere charakteristische Größen kommen bspw. statistische Größen der Abtastwerte des Verlaufs 12, insbesondere die Standardabweichung, innerhalb eines Rasterschritts 13 in Frage. Dabei werden die Rasterschritte 13 so klein gewählt, dass die Standardabweichung einen vorgebbaren Wert nicht übersteigt.

Alternativ werden die Rasterschritte 13 in Abhängigkeit von dem Abstand des Maximalwerts 14 oder des Minimalwerts 15 zu dem Mittelwert 16 der Abtastwerte des Verlaufs 12 innerhalb eines Rasterschrittes 13 variabel gewählt. Dabei werden die Rasterschritte 13 so klein gewählt werden, dass der Abstand einen vorgebbaren Wert nicht übersteigt.

## Patentansprüche

1. Verfahren zum Aufzeichnen des Verlaufs (12) von mit einer vorgebbaren Abtastzeit abgetasteten Informationen, insbesondere von Betriebsdaten eines Kraftfahrzeugs, bei dem die abgetasteten Informationen einer Datenreduktion unterzogen und die reduzierten Informationen abgespeichert werden, wobei im Rahmen der Datenreduktion der Verlauf (12) der abgetasteten Informationen in einem Zeitraster von einem Vielfachen der Abtastzeit betrachtet und innerhalb der einzelnen Rasterschritte (13) mindestens eine charakteristische Größe (14, 15, 16) des Verlaufs (12) der abgetasteten Informationen ermittelt wird, **dadurch gekennzeichnet, dass** die Rasterschritte (13) in Abhängigkeit von mindestens einer weiteren charakteristischen Größe des Verlaufs (12) der abgetasteten Informationen innerhalb eines Rasterschrittes (13) variabel gewählt werden.

2. Verfahren nach Anspruch 1, **dadurch gekennzeichnet, dass** als charakteristische Größe des Verlaufs (12) der abgetasteten Informationen die Maximalwerte (14) und/oder Minimalwerte (15) der Abtastwerte innerhalb der Abtastschritte (13) ermittelt werden.

3. Verfahren nach Anspruch 1 oder 2, **dadurch gekennzeichnet, dass** als charakteristische Größe des Verlaufs (12) der abgetasteten Informationen der Mittelwert (16) der Abtastwerte innerhalb der Rasterschritte (13) ermittelt wird.

4. Verfahren nach Anspruch 1, **dadurch gekennzeichnet, dass** die Rasterschritte (13) in Abhängigkeit von der Standardabweichung der Abtastwerte des Verlaufs (12) der Informationen innerhalb eines Rasterschrittes (13) variabel gewählt werden.

5. Verfahren nach Anspruch 4, **dadurch gekennzeichnet, dass** die Rasterschritte (13) so klein gewählt werden, dass die Standardabweichung einen vorgebbaren Wert nicht übersteigt.

6. Verfahren nach Anspruch 1 bis 3, **dadurch gekennzeichnet, dass** die Rasterschritte (13) in Abhängigkeit von dem Abstand des Maximalwerts (14) oder des Minimalwerts (15) zu dem Mittelwert (16) der Abtastwerte innerhalb eines Rasterschrittes (13) des Verlaufs (12) der Informationen variabel gewählt werden.

7. Verfahren nach Anspruch 6, **dadurch gekennzeichnet, dass** die Rasterschritte (13) so klein gewählt werden, dass der Abstand einen vorgebbaren Wert nicht übersteigt.

8. Steuerelement (3, 8), insbesondere Read-Only-Memory (ROM) einschließlich EPROM oder EEPROM, Random-Access-Memory (RAM) einschließlich FeRAM oder Flash-Memory, für ein Steuergerät (1) zur Steuerung/Regelung bestimmter Krafifahrzeugkomponenten oder für einen Betriebs- oder Unfalldatenschreiber (2) eines Kraftfahrzeugs, auf dem ein Programm abgespeichert ist, das auf einem Rechengerät, insbesondere auf einem Mikroprozessor (4, 9), ablauffähig und zur Ausführung eines Verfahrens nach einem der Ansprüche 1 bis 7 geeignet ist.

9. Vorrichtung zum Aufzeichnen des Verlaufs (12) von mit einer vorgebbaren Abtastzeit abgetasteten Informationen, insbesondere von Betriebsdaten eines Kraftfahrzeugs, wobei die Vorrichtung Mittel zur Datenreduktion der abgetasteten Informationen und Mittel zum Abspeichern der reduzierten Informationen aufweist, wobei die Mittel zur Datenreduktion den Verlauf der abgetasteten Informationen in einem Zeitraster von einem Vielfachen der Abtastzeit betrachten und innerhalb der einzelnen Rasterschritte (13) mindestens eine charakteristische Größe des Verlaufs (12) der abgetasteten Informationen ermitteln, **dadurch gekennzeichnet, dass** weitere Mittel enthalten sind, welche die Rasterschritte (13) in Abhängigkeit von mindestens einer weiteren charakteristischen Größe des Verlaufs (12) der abgetasteten Informationen innerhalb eines Rasterschrittes (13) variabel wählen.

10. Vorrichtung nach Anspruch 9, **dadurch gekennzeichnet, dass** die Vorrichtung Bestandteil mindestens eines Steuergeräts (1) zur Steuerung/Regelung bestimmter Kraftfahrzeugkomponenten ist.

11. Vorrichtung nach Anspruch 9, **dadurch gekennzeichnet, dass** die Vorrichtung Bestandteil eines Betriebs- oder Unfalldatenschreibers (2) eines Kraftfahrzeugs ist.

12. Computerprogramm mit Programmcode-Mitteln, um alle Schritte von wenigstens einem der Ansprüche 1 bis 7 durchzuführen, wenn das Computerprogramm auf einem Computer ausgeführt wird.

13. Computerprogrammprodukt mit Programmcode-Mitteln, die auf einem computerlesbaren Datenträger gespeichert sind, um das Verfahren nach wenigstens einem der Ansprüche 1 bis 7 durchzuführen, wenn das Computerprogrammprodukt auf einem Computer ausgeführt wird.

## Claims

1. Method for plotting the profile (12) of information which is sampled with predefinable sampling time, in particular operational data of a motor vehicle, in which the sampled information is subjected to a data reduction, and the reduced data is stored, in which case, within the scope of the data reduction, the profile (12) of the sampled information is considered in a timing pattern of a multiple of the sampling time and at least one characteristic variable (14, 15, 16) of the profile (12) of the sampled information is determined within the individual pattern steps (13), **characterized in that** the pattern steps (13) are selected in a variable fashion as a function of at least one further characteristic variable of the profile (12) of the sampled information within one pattern step (13).

2. Method according to Claim 1, **characterized in that** the maximum values (14) and/or minimum values (15) of the sampled values are determined within the sampling steps (13) as a characteristic variable of the profile (12) of the sampled information.

3. Method according to Claim 1 or 2, **characterized in that** the mean value (16) of the sampled values is determined within the patterned steps (13) as a characteristic variable of the profile (12) of the sampled information.

4. Method according to Claim 1, **characterized in that** the patterned steps (13) are selected in a variable fashion as a function of the standard deviation of the sampled values of the profile (12) of the information within one patterned step (13).

5. Method according to Claim 4, **characterized in that** the pattern steps (13) are selected to be so small that the standard deviation does not exceed a predefinable value.

6. Method according to Claims 1 to 3, **characterized in that** the pattern steps (13) are selected in a variable fashion as a function of the distance between the maximum value (14) or the minimum value (15) and the mean value (16) of the sampled values within one pattern step (13) of the profile (12) of the information.

7. Method according to Claim 6, **characterized in that** the pattern steps (13) are selected to be so small that the distance does not exceed a predefinable value.

8. Control element (3, 8), in particular read-only memory (ROM), including an EPROM or EEPROM, random-access memory (RAM) including FeRAM or flash memory, for a control device (1) for controlling/adjusting specific motor vehicle components or for an operational data or accident data plotter (2) of a motor vehicle on which a program is stored which can be executed on a computing device, in particular on a microprocessor (4, 9), and is suitable for carrying out a method according to one of Claims 1 to 7.

9. Device for recording the profile (12) of information which is sampled with a predefinable sampling time, in particular operational data of a motor vehicle, the device having means for data reduction of the sampled information and means for storing the reduced information, the means for data reduction considering the profile of the sampled information in a timing pattern of a multiple of the sampling time and determining at least one characteristic variable of the profile (12) of the sampled information within the individual pattern steps (13), **characterized in that** the device contains further means which select the pattern steps (13) as a function of at least one further characteristic variable of the profile (12) of the sampled information within one pattern step (13).

10. Device according to Claim 9, **characterized in that** the device is a component of at least one control device (1) for controlling/adjusting specific motor vehicle components.

11. Device according to Claim 9, **characterized in that** the device is a component of an operational or accident data plotter (2) of a motor vehicle.

12. Computer program having program code means for carrying out all the steps of at least one of Claims 1 to 7 if the computer program is executed on a computer.

13. Computer program product having program code means which are stored on a computer-readable data carrier in order to carry out the method according to at least one of Claims 1 to 7 if the computer program product is executed on a computer.

## Revendications

1. Procédé pour enregistrer la courbe (12) d'informations lues avec un temps de lecture pouvant être prédéterminé, en particulier de données de fonctionnement d'un véhicule automobile, selon lequel les informations lues sont soumises à une réduction de données et les informations réduites sont mémorisées, en rapportant, dans le cadre de la réduction des données, la courbe (12) des informations lues dans une trame de temps d'un multiple du temps de lecture, et en calculant à l'intérieur de chaque, pas élémentaire (13) de la trame, au moins une grandeur caractéristique (14, 15, 16) de la courbe (12) des informations lues,
**caractérisé en ce que**
les pas (13) de la trame sont choisis de façon variable en fonction d'au moins une autre grandeur caractéristique de la courbe (12) des informations lues dans les limites d'un pas (13) de la trame.

2. Procédé selon la revendication 1,
**caractérisé en ce que**
comme grandeur caractéristique du de la courbe (12) des informations lues, on détermine les valeurs maximales (14) et/ou les valeurs minimales (15) des valeurs de lecture dans les pas de lecture (13).

3. Procédé selon la revendication 1 ou 2,
**caractérisé en ce que**
comme grandeur caractéristique de la courbe (12) des informations lues, on détermine la moyenne (16) des valeurs de lecture dans les pas (13) de la trame.

4. Procédé selon la revendication 1,
**caractérisé en ce que**
les pas (13) de la trame sont choisis variables en fonction de l'écart standard des valeurs de lecture de la courbe (12) des informations à l'intérieur d'un pas (13) de la trame.

5. Procédé selon la revendication 4,
**caractérisé en ce que**
les pas (13) de la trame sont choisis suffisamment petits pour que l'écart standard ne devienne pas supérieur à une valeur pouvant être prédéterminée.

6. Procédé selon une des revendications 1 à 3,
**caractérisé en ce que**
les pas (13) de la trame sont choisis en fonction de la distance entre la valeur maximale (14) ou la valeur minimale (15) et la moyenne (16) des valeurs de lecture à l'intérieur d'un pas (13) de la trame de la courbe (12) des informations.

7. Procédé selon la revendication 6,
**caractérisé en ce que**
les pas (13) de la trame sont choisis suffisamment petits pour la distance ne devienne pas supérieure à une valeur pouvant être prédéterminée.

8. Elément de commande (3, 8), en particulier mémoire morte (ROM), y compris EPROM ou EEPROM, mémoire vive (RAM), y compris FeRAM ou mémoire Flash, pour un appareil de commande (1) destiné à la commande/régulation de composants déterminés de véhicule automobile ou pour un enregistreur de données de fonctionnement ou d'accident (2) d'un véhicule automobile, sur lequel est mémorisé un programme qui peut être exécuté sur un appareil de calcul, en particulier sur un microprocesseur (4, 9), et pour l'exécution d'un procédé selon l'une des revendications 1 à 7.

9. Dispositif pour enregistrer la courbe (12) d'informations lues avec un temps de lecture pouvant être prédéterminé, en particulier de données de fonctionnement d'un véhicule automobile, le dispositif comprenant des moyens pour la réduction des données des informations lues et des moyens pour la mémorisation des informations réduites, les moyens pour la réduction des données rapportant le cheminement des informations lues dans une trame de temps d'un multiple du temps de lecture et déterminant à l'intérieur des pas élémentaire (13) de la trame au moins une grandeur caractéristique de la courbe (12) des informations lues,
**caractérisé en ce qu'**
il comporte d'autres moyens qui sélectionnent de façon variable les pas (13) de la trame en fonction d'au moins une autre grandeur caractéristique de la courbe (12) des informations lues à l'intérieur d'un pas (13) de la trame.

10. Dispositif selon la revendication 9,
**caractérisé en ce que**
le dispositif fait partie d'au moins un appareil de commande (1) pour la commande/régulation de certains composants de véhicule automobile.

11. Dispositif selon la revendication 9,
**caractérisé en ce que**
le dispositif fait partie d'un enregistreur de données de fonctionnement ou d'accident (2) d'un véhicule automobile.

12. Programme d'ordinateur comprenant des moyens de code de programme pour exécuter toutes les étapes d'au moins une des revendications 1 à 7, si le programme d'ordinateur est exécuté sur un ordinateur.

13. Produit constitué par un programme d'ordinateur, comprenant des moyens de code de programme qui sont mémorisés sur un support de données pouvant être lu par un ordinateur pour exécuter le procédé selon au moins l'une des revendications 1 à 7, lorsque le produit constitué par le programme d'ordinateur est exécuté sur un ordinateur.
